# EUROPEAN PATENT APPLICATION

(11) **EP 1 628 208 A2**
(43) Date of publication of application: **22.02.2006**
(21) Application number: 04257438.4
(22) Date of filing: 30.11.2004
(51) Int. Cl.: G06F 9/38, G06F 12/08

(54) **Store data control device and store data control method**

(30) Priority: 30.07.2004 JP 2004224559
(71) Applicant: FUJITSU LIMITED, Kawasaki-shi, Kanagawa 211-8588 (JP)
(72) Inventor: Yamazaki, Iwao, Fujitsu Limited, Kawasaki-shi, Kanagawa 211-8588 (JP)
(74) Representative: Mohun, Stephen John

(57) **Abstract**

A store data control device that controls a store buffer and a write buffer that temporarily retains store data, and that executes a merging process on store data when transferring store data from the store buffer to the write buffer. The store data control device acquires a buffer state of at least one of the store buffer and the write buffer, and based on the buffer state acquired controls whether to start or cancel a queuing process corresponding to the merging process.

## Description

### BACKGROUND OF THE INVENTION

### 1) Field of the invention

The present invention relates to a store data control device that has a store buffer and a write buffer that temporarily retain store data, and executes a merging process on store data when store data are transferred from the store buffer to the write buffer, and a store data control method.

### 2) Description of the Related Art

Conventionally, store data control devices, which execute a merging process on store data in a buffer that temporarily retains the store data and reflect the store data on a storage device, are known. Since a frequency of an instruction for the reflection of the store data on the storage device is reduced due to the merging process on the store data, the store data can be reflected efficiently on the storage device.

For example, Japanese Patent Application Laid-Open No. 2000-181780 discloses a store data control technique in which store data received from an arithmetic device are retained in a write buffer so that a queuing corresponding to the merging process is executed, a timer that monitors an interval of a write request from the arithmetic device is provided, and when timeout of the timer is detected, the queuing process is canceled.

In the conventional technique, however, the queuing process is canceled only at the time when the timeout of the timer is detected. When the condition for canceling the queuing process is only the timeout of the timer, the queuing processes are not canceled uniformly until the timeout is detected, leading to frequent occurrence of unnecessary queuing processes, thereby deteriorating the efficiency of the reflection of the store data on the storage device.

When, for example, the store data in the write buffer is in a queuing process corresponding to the merging process, a subsequent instruction for the fetching of the store data is forced to wait until the timeout of the timer.

On the other hand, when the occasion of the merging process and the frequency of the merging process are reduced in order to avoid unnecessary queuing processes corresponding to the merging process, the write buffer is used wastefully, and instructions for the reflection of the store data on the storage device are generated frequently, thereby deteriorating the efficiency of the reflection of the store data on the storage device.

The present invention is defined in the attached independent claims to which reference should now be made. Further, preferred features may be found in the sub-claims appended thereto.

A store data control device according to an aspect of the present invention controls a store buffer and a write buffer that temporarily retain store data, and that executes a merging process on store data when transferring store data from the store buffer to the write buffer. The store data control device a state acquiring unit that acquires a buffer state of at least one of the store buffer and the write buffer; and a queuing control unit that controls, based on the buffer state acquired, any one of whether to start and whether to cancel a queuing process corresponding to the merging process.

A method according to another aspect of the present invention includes controlling store data in a store buffer and a write buffer that temporarily retain store data and executing a merging process on store data when transferring store data from the store buffer to the write buffer. The method includes acquiring a buffer state of at least one of the store buffer and the write buffer; and controlling, based on the buffer state acquired, any one of whether to start and whether to cancel a queuing process corresponding to the merging process.

The other objects, features, and advantages of the present invention are specifically set forth in or will become apparent from the following detailed description of the invention when read in conjunction with the accompanying drawings.

### BRIEF DESCRIPTION OF THE DRAWINGS

Fig. 1 is a functional block diagram of a store data controller according to an embodiment of the present invention;
Fig. 2 is an explanatory diagram of the summary of a store data control process according to the embodiment;
Fig. 3 is an explanatory diagram of a configuration of a write buffer according to the embodiment;
Fig. 4 is a flowchart of the store data control process according to the embodiment; and
Fig. 5 is a flowchart of a queuing cancel condition detecting process shown in Fig. 4.

### DETAILED DESCRIPTION

Exemplary embodiments of a store data control device and a store data control method are explained in detail with reference to the accompanying drawings. In the embodiments, the present invention is applied to a central processing unit.

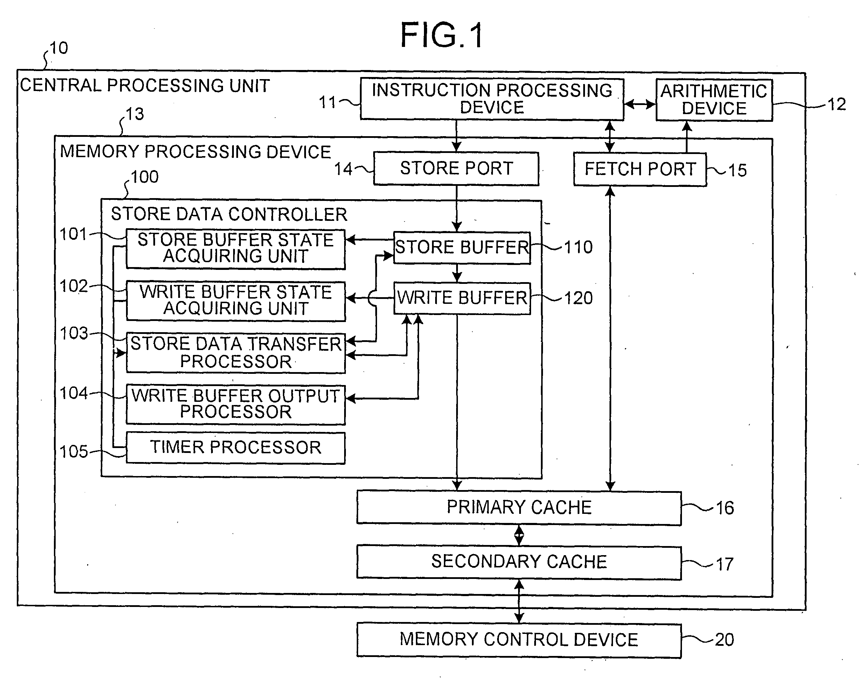

A configuration of a store data controller as a characteristic portion in this embodiment is explained below. Fig. 1 is a functional block diagram of a central processing unit including the store data controller. As shown in the drawing, the central processing unit 10 in this embodiment is connected to a primary memory via a memory control device 20. The memory control device 20 controls the fetching of data and instructions from the primary memory and stores data in the primary memory based on a request from the central processing unit 10.

The central processing unit 10 has an instruction processing device 11, an arithmetic device 12, and a memory processing device 13. The memory processing device 13 further includes a store port 14, a fetch port 15, a primary cache 16, a secondary cache 17, and a store data controller 100.

The instruction processing device 11 reads an instruction of a program developed in the primary memory, and makes the arithmetic device 12 carry out the instruction. The arithmetic device 12 performs various operations according to an instruction from the instruction processing device 11. The memory processing device 13 inputs/outputs storage data into/from the memory control device 20. The primary cache 16 and the secondary cache 17 are cache memories that temporarily retain instructions and data more highly likely to be accessed.

The store port 14 is a buffer that temporarily stores a store instruction as an instruction for writing data into the primary cache 16, and the fetch port 15 is a buffer that temporarily stores a fetch instruction as an instruction for reading the data from the primary cache 16.

The store data controller 100 has a store buffer 110 and a write buffer 120 that temporarily store the stores input into the store port 14. The stores are once stored in queues of the store buffer 110, and are transferred to the write buffer 120 depending on the situation. The stores stored in the write buffer 120 are written into the primary cache 16 successively starting from one at the head of the queues in the write buffer 120.

On the other hand, the end of the queues in the write buffer undergoes the queuing so as to be merged with the store in the store buffer 110. Since the execution of the merging process can reduce the number of times for writing into the primary cache 16, the store data can be reflected on the primary cache 16 efficiently. Since the merging process, however, requires the queuing process for the next store, if the queuing is not efficiently canceled, wasteful queuing for the merging process is generated, and thus the store data cannot be reflected on the primary cache 16 smoothly.

In this embodiment, a unit that acquires states of the store buffer 110 and the write buffer 120 is provided so that the occasion of the merging process is increased based on the acquired states, and simultaneously a queuing cancel condition detecting process such as a timer process that limits the acquired states and a queuing time is provided so as to cancel the queuing. When the queuing corresponding to the merging process and the cancel of the queuing are controlled in such a manner, the store data can be reflected on the primary cache 16 smoothly. This embodiment explains the situation where the store data controller 100 is applied to the writing of the store data into the primary cache 16, but the store data controller 100 can be applied also to the writing of the store data into the secondary cache 17 and the memory control device 20.

The store data controller 100 has a store buffer state acquiring unit 101, a write buffer state acquiring unit 102, a store data transfer processor 103, a write buffer output processor 104, and a timer processor 105 in order to control the queuing and the cancel of queuing corresponding to the merging process.

The store buffer state acquiring unit 101 is a processor that acquires a queuing state in the store buffer 110 and a state of the stores to be stored in the queues. The write buffer state acquiring unit 102 is a processor that acquires a queuing state in the write buffer 120 and a state of the stores stored in the queues.

The store data transfer processor 103 acquires information from the store buffer state acquiring unit 101, the write buffer state acquiring unit 102, and the timer processor 105, and transfers the store data from the store buffer 110 to the write buffer 120 based on the information. Further, the timer processor 150 executes the timer process of limiting the time required for queuing corresponding to the merging process.

The processing procedure of the store instruction is explained. The instruction processing device 11 decrypts the store instruction, and the decrypted store instruction is transmitted to the memory processing device 13. The memory processing device 13 receives the store instruction via the store port 14 and the fetch port 15.

The store port 14 that receives the store instruction is brought into a valid state. The fetch port 15 that receives the store instruction puts the store instruction into a pipe line in the memory processing device 13, checks presence of a cache hit in a store target area. When a cache miss occurs, the fetch port 15 records a cache line in the primary cache 16. Simultaneously with this recording process, the fetch port 15 searches for a TLB (Translation Look-aside Buffer), and converts a virtual address of the target store into a physical address, so as to reflect the converted result on data in the store port. Further, the fetch port 15 checks the exception of a store access according to a page attribute of the virtual address recorded in the TLB.

The memory processing device 13 posts the presence or absence of the exception acquired by the exception check to the instruction processing device 11 using a STV (Status Valid) signal. At about the time of the post, when the store data are prepared in the arithmetic device 12, the instruction processing device 11 issues the store data to the memory processing device 13 and posts the issue of the store data using a STDV (Store Data Valid) signal.

The memory processing device 13 that receives the store data aligns the received store data so as to match with the alignment of data on the central processing unit 10 based on an operand length and alignment information of the store data, and stores them in STDR (Store Data Register). When the instruction processing device 11 completes the reception of the STV signal and the STDV signal, the store instruction is brought into a queuing state.

When execution of all instructions, such as a store instruction, a fetch instruction, a branching instruction, and an operation instruction that precede the store instruction in the execution queuing state, is completed, the store instruction in the execution queuing state becomes executable. As to the store instruction in the executable state, a commitment signal that permits the storage is posted from the instruction processing device 11 to the memory processing device 13.

The memory processing device 13 that receives the commitment signal refers to an ID (identification number) representing a commitment target store port presented together with the received commitment signal, and the specified store port 14 receives the commitment signal. The store port 14 that receives the commitment signal is brought into a READY state, and the store data can be transmitted from the store buffer 110 to the write buffer 120.

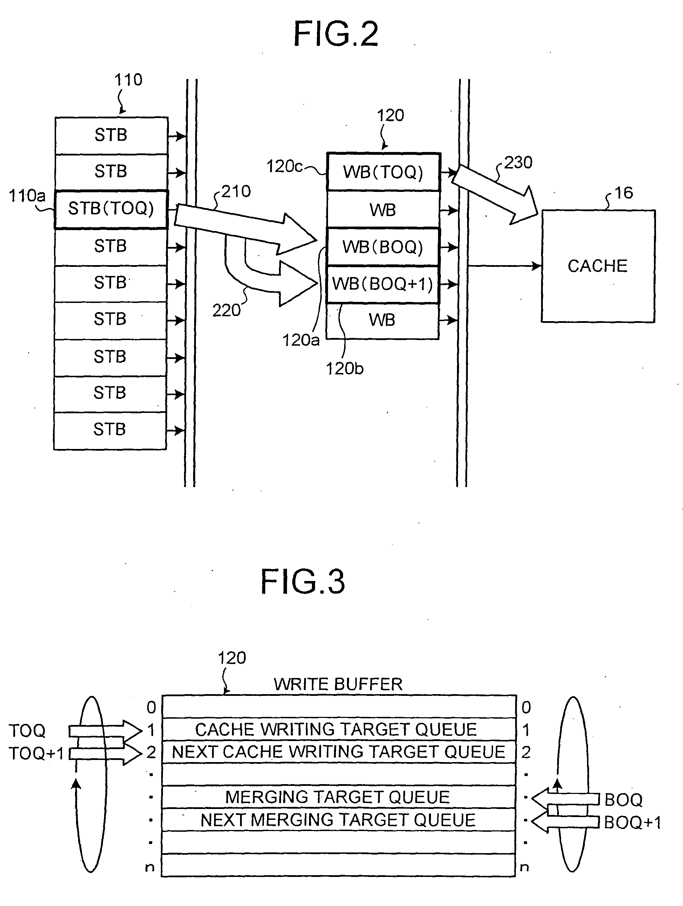

The summary of a process in the store data controller 100 which is the characteristic portion in this embodiment is explained below. Fig. 2 is an explanatory diagram of the summary of the store data control process. As shown in the drawing, the store data once retained in the store buffer (STB) 110 are transferred to the write buffer (WB) 120, so as to be written into the primary cache 16.

As shown in Fig. 2, the store buffer 110 and the write buffer 120 are queues that can store a predetermined number of store data. The store data that are stored in the store buffer 110 sequentially are managed by TOQ (Top of Queue) representing a queue in which the store data are stored at the earliest time. The store data in the TOQ become data to be transferred to the write buffer 120. The write buffer 120 is managed by the TOQ (Top of Queue) representing a queue in which the data are stored in the earliest time and BOQ (Bottom of Queue) representing a queue in which the data are stored in the latest time. The store data in the BOQ become the target for the merging process, and the store data in the TOQ become the target for cache writing 230 into the primary cache 16.

When the data in a STB (TOQ) 110a as the data in the TOQ of the store buffer are transferred to the write buffer 120, the store data transfer processor 103 transfers the data in the STB (TOQ) 110a to queues in the write buffer 120 that are different from each other between the case of merge queuing 210 and the case of merge queuing cancel 220. That is, a target queue in the write buffer 120 at the time of queuing for the merging process is a WB (BOQ) 120a, and when the condition of canceling the queuing is detected, the target queue is changed into a WB (BOQ+1) 120b. The queuing cancel condition is explained later.

A configuration of the write buffer 120 is explained with reference to Fig. 3. Fig. 3 is an explanatory diagram of the configuration of the write buffer 120. As shown in the drawing, the TOQ indicates a queue of the queues in the write buffer, into which writing is carried out in the earliest time. When the writing from the write buffer into the primary cache 16 is completed, 1 is added (incremented) to the TOQ in order to indicate a next queue. When the TOQ reaches the queue "n" in the write buffer 120 and indicates a next queue in the write buffer, the TOQ is wrapped around to indicate the queue "0".

The BOQ indicates a queue of the queues in the write buffer 120, in which writing is carried out in the latest time, but when the write buffer 120 has empty queues, the BOQ indicates a queue of the empty queues, which is the closest to the TOQ. The BOQ or the BOQ+1 becomes a transfer destination of the store data to be stored in the TOQ of the store buffer 110. The store data transfer processor 103 switches the transfer destination.

The conditions at the time when the transfer destination is the BOQ at the time when it is the BOQ+1 are as follows. When the BOQ in the write buffer 120 is empty, the BOQ becomes the transfer destination. When preceding store data are stored in the BOQ of the write buffer 120, and the store data and store data in the TOQ of the store buffer 110 can be merged, the BOQ also becomes the transfer destination. When preceding store data are stored in the BOQ in the write buffer 120, and the store data and store data in TOQ of the store buffer 110 can be merged, the BOQ+1 becomes the transfer destination.

When the store data transfer processor 103 detects the condition of canceling the queuing corresponding to the merging process, the BOQ+1 becomes the transfer destination. When the BOQ+1 becomes the new transfer destination, 1 is added (incremented) to the BOQ in order to indicate a next queue. When the BOQ reaches the queue "n" in the write buffer 120 and indicates a next queue in the write buffer, the BOQ is wrapped around to indicate the queue "0".

The store data transfer processor 103 performs a control so that the BOQ in the write buffer does not write the store data into the primary cache 16. This is because when the BOQ matches with the TOQ, if the process of merging the store data with a subsequent store instruction is generated during the period from the time at which the writing of the store data in the TOQ into the primary cache 16 is started through until the time at which the writing is completed, the store data under the subsequent store instruction are not reflected on the primary cache 16 and the data are corrupted. Therefore, because a control is performed to prohibit writing from the BOQ in the write buffer, such corrupted data can be avoided.

The store data transfer processor 103 performs a control so that only data to be stored in the BOQ are in a target queue for merging. When data to be stored in a queue other than the BOQ are also subject to merging, the executing order of the store instructions is disturbed, and TSO (Total Store Order) or the executing order of the store instruction under the multiprocessor environment, which is called an implicit serializing, cannot be assured thus generating corrupted data. Therefore, because only data to be stored in the BOQ are in the target queue for the merging, such corrupted data can be avoided.

The store data in the store buffer 110 are stored in the BOQ in the write buffer 120 in such a manner. The store data, which is in the queue other than the BOQ because the BOQ is incremented, are written into the primary cache 16 when they are in the TOQ.

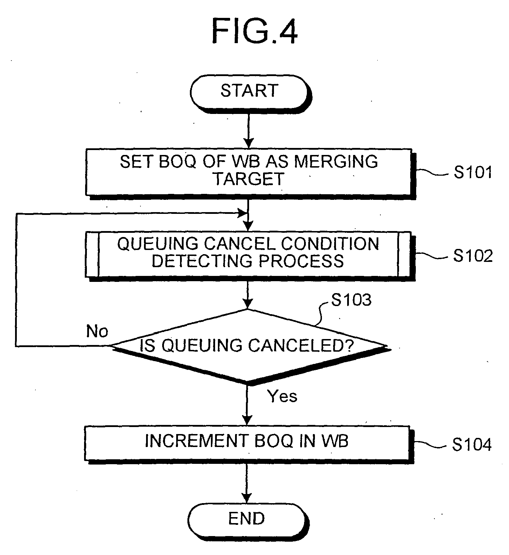

Characteristic portion of this embodiment is explained below. Fig. 4 is a flowchart of the procedure of the store data control process.

When valid store data are stored in the BOQ in the write buffer 120, the store data transfer processor 103 starts the queuing process corresponding to the merging process. The BOQ in the write buffer 120 is subject to the merging (step S101). The queuing is carried out by maintaining the BOQ in the write buffer (BOQ is not incremented).

The store data transfer processor 103 detects the queuing cancel condition based on information acquired from the store buffer state acquiring unit 101, the write buffer state acquiring unit 102, and the transfer processor 103 (step S102). When the result of the detection is "cancel queuing" (Yes at step S103), the BOQ in the write buffer 120 is incremented (step S104). That is, the queuing corresponding to the merging process is canceled when the queuing cancel condition, mentioned later, is detected at the queuing cancel condition detecting process (step S102).

On the other hand, when the result of the detection is "continue queuing" (No at step S103), the processes at step S102 and after are executed. The generation of the queuing cancel condition is monitored continuously during the queuing process, and when the queuing cancel condition is detected, the queuing relating to a subsequent store instruction is immediately canceled, so that wasteful queuing is avoided.

A series of the process relating to the writing is started in the queue that is removed from the targets for the merging process by incrementing the BOQ as a queue that is subject to the writing into the primary cache 16.

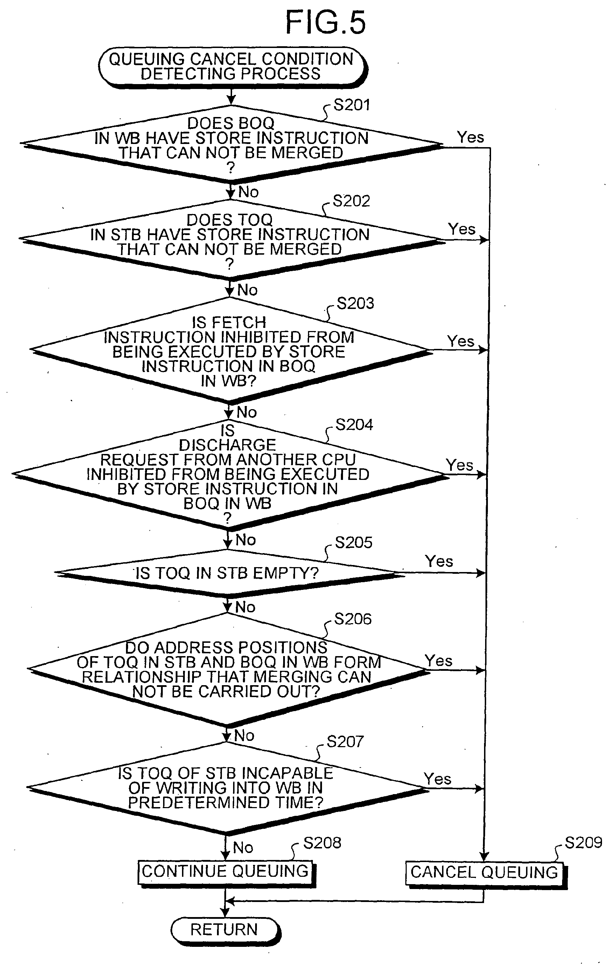

The procedure of a queuing cancel condition detecting process shown in Fig. 4 is explained below with reference to Fig. 5. Fig. 5 is a flowchart of the procedure of the queuing cancel condition detecting process. As shown in the drawing, seven queuing cancel conditions at steps S201 to S207 are present. In Fig. 5, steps S201 to S207 are executed in this order only for the convenience of the explanation, and the order of the steps is not limited thereto. Therefore, steps can be executed in parallel.

In the queuing cancel condition detecting process, it is determined whether the BOQ in the write buffer 120 has a store instruction that can not be merged (step S201). Specifically, the write buffer state acquiring unit 102 refers to the store data stored in the BOQ, and when the store instruction related with the store data is the store instruction that can not be merged (Yes at step S201), "cancel queuing" is set to a return value (step S209) so that the process is returned. On the other hand, when the store can be merged (No at step S201), the queuing cancel condition is continuously detected.

It is determined whether the TOQ in the store buffer 110 has a store instruction that can not be merged (step S202). Specifically, the store buffer state acquiring unit 101 refers to the store data stored in the TOQ, and when the store instruction related with the store data can not be merged (Yes at step S202), "cancel queuing" is set to a return value (step S209) so that the process is returned. On the other hand, when the store instruction can be merged (No at step S202), the queuing cancel condition is continuously detected.

It is determined whether a subsequent fetch instruction is inhibited from being executed by the store instruction in the BOQ in the write buffer 120 (step S203). Specifically, the write buffer state acquiring unit 102 refers to the store data stored in this BOQ, and when the subsequent fetch instruction, which is forced to wait by the store instruction related with the store data, is present (Yes at step S203), "cancel queuing" is set to the return value (step S209) so that the process is returned. When the fetch instruction is not inhibited from being executed (No at step S203), the queuing cancel condition is continuously detected.

It is determined whether a discharge request from another central processing unit is inhibited from being executed by the store instruction in the BOQ in the write buffer 120 (step S204). Specifically, the write buffer state acquiring unit 102 refers to the store data stored in the BOQ, and when the discharge request from another central processing unit, which is inhibited from being executed by the store instruction related with the store data, is made (Yes at step S204), "cancel queuing" is set to the return value (step S209) so that the process is returned. Meanwhile, when the execution of the discharge request is not inhibited (No at step S204), the queuing cancel condition is continuously detected.

It is determined whether the TOQ in the store buffer 110 is empty (step S205). Specifically, the store buffer state acquiring unit 101 refers to the TOQ, and when the store data are not stored in this queue (Yes at step S205), "cancel queuing" is set to the return value (step S209), so that the process is returned. When the store data are stored in the queue (No at step S205), the queuing cancel condition is continuously detected.

It is determined whether the address positions represented by the store data stored in the TOQ in the store buffer 110 and the BOQ in the write buffer 120 form a relationship that the merging cannot be carried out (step S206). Specifically, the store buffer state acquiring unit 101 and the write buffer state acquiring unit 102 refer to the TOQ and the BOQ, respectively, and when the address positions represented by the store data stored in the respective queues form the relationship that the merging cannot be carried out (Yes at step S206), "cancel queuing" is set to the return value (step S209), so that the process is returned. When the address positions form a relationship that the merging can be carried out (No at step S206), the queuing cancel condition is continuously detected.

It is determined whether a predetermined time elapses with the store data, which can be transferred to the write buffer 120 (READY state), being absent in the TOQ in the store buffer 110 (step S207). Specifically, the store buffer state acquiring unit 101 refers to the TOQ and the timer processor 105 refers to the elapsed time from the starting of the queuing, and when it is detected that the predetermined time elapses with the store data, which can be written, being absent in the write buffer 120 (Yes at step S207), "cancel queuing" is set to the return value (step S209) so that the process is returned.

When all the determination results are negative at steps S201 to S207, namely, the queuing cancel condition is not detected, "continue queuing" is set to the return value (step S208), so that the process is returned.

In this embodiment, the units that acquire the states of the store buffer and the write buffer are provided so that the occasion of the merging is increased based on the acquired states, and the queuing cancel condition detecting process such as the timer process for limiting the acquired states and the queuing time is provided so that the queuing is canceled. Therefore, the store data can be efficiently reflected on the storage device.

According to the present invention, the state of any one of the store buffer and the write buffer or both is acquired, and any one of the starting and the cancel or both of the queuing corresponding to the merging process is controlled based on the buffer state acquired by the state acquiring unit. Therefore, the occasion of the merging process and the occasion to cancel the queuing corresponding to the merging process can be increased, so that the store data can be efficiently reflected on the storage device.

According to the present invention, even if store data that can be transferred to the write buffer are not present in the store buffer, when store data retained in the store buffer becomes possible to be transferred, the queuing corresponding to the merging process is started. Therefore, the occasion of the merging process can be increased, and thus the store data can be efficiently reflected on the storage device.

According to the present invention, when store data that can undergo the merging process are not present in the write buffer, the queuing process corresponding to the merging process is canceled. Therefore, the occasion to cancel the queuing corresponding to the merging process can be increased, and thus the store data can be efficiently reflected on the storage device.

According to the present invention, when store data that can be transferred to the write buffer are not present in the store buffer, the queuing process corresponding to the merging process is canceled. Therefore, the occasion to cancel the queuing corresponding to the merging process can be increased, and thus the store data can be efficiently reflected on the storage device.

According to the present invention, since the store data in the write buffer is in the queuing process corresponding to the merging process, when the execution of a subsequent fetch instruction is inhibited, the queuing is canceled. Therefore, the occasion to cancel the queuing corresponding to the merging process can be increased, and thus the store data can be efficiently reflected on the storage device.

According to the present invention, since the store data in the write buffer is in the queuing process corresponding to the merging process, when the execution discharge request from another central processing unit is inhibited, the queuing is canceled. Therefore, the occasion to cancel the queuing corresponding to the merging process can be increased, and thus the store data can be efficiently reflected on the storage device.

According to the present invention, when the store buffer does not retain store data, the queuing process corresponding to the merging process is canceled. Therefore, the occasion to cancel of the queuing corresponding to the merging process can be increased, and thus the store data can be efficiently reflected on the storage device.

According to the present invention, when addresses of the store data retained in the store buffer and the store data retained in the write buffer do not form a positional relationship where the merging can be carried out, the queuing corresponding to the merging process is canceled. Therefore, the occasion to cancel the queuing corresponding to the merging process can be increased, and thus the store data can be efficiently reflected on the storage device.

According to the present invention, when the queuing of the store data in the write buffer corresponding to the merging process continues for a predetermined time, the queuing corresponding to the merging process is canceled. Therefore, the occasion to cancel the queuing corresponding to the merging process can be increased, and thus the store data can be efficiently reflected on the storage device.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A store data control device that controls a store buffer and a write buffer that temporarily retain store data, and that executes a merging process on store data when transferring store data from the store buffer to the write buffer, comprising:
a state acquiring unit that acquires a buffer state of at least one of the store buffer and the write buffer; and
a queuing control unit that controls, based on the buffer state acquired, any one of whether to start and whether to cancel a queuing process corresponding to the merging process.

2. The store data control device according to claim 1, wherein if the buffer state acquired indicates that the store buffer does not include store data that can be transferred to the write buffer, and also indicates that the store data in the store buffer can be transferred to the write buffer, the queuing control unit starts the queuing process.

3. The store data control device according to claim 1, wherein if the buffer state acquired indicates that the write buffer does not include store data that can be merged, the queuing control unit cancels the queuing process.

4. The store data control device according to claim 1, wherein if the buffer state acquired indicates that the store buffer does not include store data that can be transferred to the write buffer, the queuing control unit cancels the queuing process.

5. The store data control device according to claim 1, wherein when a subsequent fetch instruction is inhibited from being executed because the store data in the write buffer is in the queuing process corresponding to the merging process, the queuing control unit cancels the queuing process.

6. The store data control device according to claim 1, wherein when a discharge request from another central processing unit is inhibited from being executed because the store data in the write buffer is in the queuing process, the queuing control unit cancels the queuing process.

7. The store data control device according to claim 1, wherein if the buffer state acquired indicates that the store buffer does not include any store data, the queuing control unit cancels the queuing process.

8. The store data control device according to claim 1, wherein if the buffer state of the store buffer and the buffer state of write buffer acquired indicate that addresses of the store data retained in the store buffer and the store data retained in the write buffer do not have a positional relationship that makes the merging possible, the queuing control unit cancels the queuing process.

9. The store data control device according to claim 1, wherein when the queuing for the store data in the write buffer corresponding to the merging process continues for a predetermined time, the queuing control unit cancels the queuing process.

10. A method of controlling store data in a store buffer and a write buffer that temporarily retain store data and executing a merging process on store data when transferring store data from the store buffer to the write buffer, comprising:
acquiring a buffer state of at least one of the store buffer and the write buffer; and
controlling, based on the buffer state acquired, any one of whether to start and whether to cancel a queuing process corresponding to the merging process.

11. The method according to claim 10, wherein if the buffer state acquired at the acquiring indicates that the store buffer does not include store data that-can be transferred to the write buffer, and also indicates that the store data in the store buffer can be transferred to the write buffer, the queuing includes starting the queuing process.

12. The method according to claim 10, wherein if the buffer state acquired at the acquiring indicates that the write buffer does not include store data that can be merged, the queuing includes canceling the queuing process.

13. The method according to claim 10, wherein if the buffer state acquired at the acquiring indicates that the store buffer does not include store data that can be transferred to the write buffer, the queuing includes canceling the queuing process.

14. The method according to claim 10, wherein when a subsequent fetch instruction is inhibited from being executed because the store data in the write buffer is in the queuing process corresponding to the merging process, the queuing includes canceling the queuing process.

15. The method according to claim 10, wherein when a discharge request from another central processing unit is inhibited from being executed because the store data in the write buffer is in the queuing process, the queuing includes canceling the queuing process.

16. The store data control method according to claim 10, wherein if the buffer state acquired at the acquiring indicates that the store buffer does not include any store data, the queuing includes canceling the queuing process.

17. The method according to claim 10, wherein if the buffer state of the store buffer and the buffer state of write buffer acquired at the acquiring indicate that addresses of the store data retained in the store buffer and the store data retained in the write buffer do not have a positional relationship that makes the merging possible, the queuing includes canceling the queuing process.

18. The method according to claim 10, wherein when the queuing for the store data in the write buffer corresponding to the merging process continues for a predetermined time, the queuing includes canceling the queuing process.
